Europäisches Patentamt

European Patent Office

Office européen des brevets

(11) Publication number:
**0 348 984**
**A1**

# EUROPEAN PATENT APPLICATION

(21) Application number: **89111891.1**

(22) Date of filing: **30.06.89**

(51) Int. Cl.4: **H02K 19/24**

(30) Priority: **30.06.88 US 213900**

(43) Date of publication of application:
**03.01.90 Bulletin 90/01**

(84) Designated Contracting States:
**BE DE FR GB**

(71) Applicant: **Brenneman, Benjamin**
**412 Dawne Ridge Drive**
**Lynchburg Virginia 24502(US)**

(72) Inventor: **Brenneman, Benjamin**
**412 Dawne Ridge Drive**
**Lynchburg Virginia 24502(US)**

(74) Representative: **von Rohr, Hans Wilhelm,**
**Dipl.-Phys. et al**
**Patentanwälte Gesthuysen & von Rohr**
**Huyssenaliee 15 Postfach 10 13 33**
**D-4300 Essen 1(DE)**

(54) **Binary brushless alternator and motor.**

(57) An alternator and motor devices are disclosed of the type which are synchronous electrical generators and motors which do not require any brushes, slip rings, commutators, or permanent magnets. The various configurations of the invention have an architecture which is fundamentally binary in nature, including an even number of excitable field coils and a like number of armature or working coils. The excitation field coils and armature coils are wound around individual salient poles of the fixed stator assembly. Thus, the total number of stator poles must be a multiple of the number four (4). A rotor is constructed of a nonmagnetic material that has no salient poles, and carries a number of circumferential links of permeable magnetic material which sequentially complete flux circuits through the stator poles in alternating directions of the armature coils. The appropriate number of rotor links is equal to the number of field coils for single phase applications, and the number of rotor links is varied with respect to the number of field coils for multiple phase applications.

FIG. IA.

## BINARY BRUSHLESS ALTERNATOR & MOTOR

### BACKGROUND OF THE INVENTION

#### Technical Field

The present invention relates generally to synchronous dynamoelectric machines including generators and motors, and particularly to brushless machines without the need for slip rings, commutators or permanent magnets, which produce or use single or multiple phase alternating current. More particularly, the present invention exploits a class of electromagnetic topologies or configurations which are fundamentally "binary" in nature. By this, it is meant that the configurations include an even number of excitation or field coils, a like even number of armature coils, and, except for multiple phase embodiments, a like number of circumferential flux links or magnetic permeable material.

#### Background Art

Brushless alternators and motors have long been known in the prior art of which various types are known according to their construction and operating principles at synchronous speed. The use of brushless alternators and motors has been accepted in environments of an explosive nature, thereby eliminating the sparks that are typical with brushes. Also, brushes must be positioned rather accurately and the elimination of the brushes increases the general ruggedness of the devices.

One type of brushless motor or alternator includes armature coils on the stator of the device and creates a rotating field produced by field coils on the rotor similar to conventional alternators with brushes, but the field coils are energized without brushes and slip rings. These type devices include an additional stationary winding and a magnetic flux link or induction means to energize a secondary winding on the rotor, in which the current is rectified to supply and excite the rotating field coils. Such devices are exemplified in U.S. Patent Nos. 2,497,141 to Schultz, 2,969,491 to Pell, and 4,647,806 to Guiffrida. These devices are disadvantageous in that they require additional windings to provide a magnetic flux link, which require additional space and increase production costs, as well as increasing the complexity of the basic device.

Another type of synchronous brushless alternator or motor, which is probably the simplest type, includes the use of permanent magnets attached to the rotor. In these devices, armature coils are wound on the stator and the rotor is provided with permanent magnets thereon. The permanent magnets do not need external power and thus there is no need for brushes or other devices to transfer electrical current from stationary to rotating machine parts. Examples of permanent magnet devices are disclosed in U.S. Patents 4,547,713 to Langley et al and 4,600,873 to Roesel, Jr. et al. The Langley et al patent discloses toroidal armature windings on the stator with permanent magnets on the rotor internal of the stator. The Roesel, Jr. et al patent starts with a combination of squirrel cage induction and hysteresis torques, but then operates at synchronous speed with a pattern of permanent magnetic poles impressed on the rotor material.

Small vehicles like motorcycles, lawn mowers and small industrial vehicles with rudimentary electrical systems often have permanent magnet type alternators as described above. Many of these alternators are constructed so that the rotor is simply mounted directly on the output shaft of the engine with the stator bolted to the engine casing. These devices are very simple and rugged and do not require additional bearings or drive means such as accessory bolts. Since no brushes are required, these devices may operate in hazardous or hostile environments, such as flammable or abrasive fluids. These devices, however, often have a poor electrical performance because of the limited strength or available permanent magnets used to create the field.

A further type of alternator or motor, of which the present invention is included, comprises stationary armature coils and field coils along with a rotor without the need for brushes. Examples of devices of this type are illustrated by U.S. Patent Nos. 3,261,998 to Bosco, Jr. et al issued July 19, 1966, 3,534,204 to Groezinger issued October 10, 1970, 3,564,307 to Kawabe issued February 16, 1971, and 4,611,139 to Godkin et al issued September 9, 1986. Each of these previously disclosed devices includes a single field coil and a rotor which primarily conducts the magnetic flux in a radial direction of the rotor. The devices of Groezinger, Bosco, Jr. et al and Godkin et al require a single armature coil to be toroidally wound on an armature core, wherein the rotor is required to supply and pick up the magnetic flux at spaced intervals along the armature core. The Kawabe patent requires a sophisticated array of rotor discs and armature coils surrounded by a single field coil, wherein the rotating discs are provided with a number of registered slots to utilize magnetic shielding and trapping of the superconducting material of the rotor discs. These types of devices cause the magnetic field to effectively rotate but generally do not reverse the field in the direction of rotation.

Other brushless motors and alternators are also known, which employ fundamentally different principles than the types described above. For example the Torok U.S. Patent No. 3,995,203 issued November 30, 1976, discloses a single phase motor with split stator poles which utilizes reluctance torque for operation. The reluctance torque arises from a difference in the direct and quadrature reactances, and this is due, at least in part, to the use of salient poles on the rotor. U.S. Patent 3,555,330 issued January 12, 1971 discloses a single phase motor which appears to utilize induction, and includes two sets of rotatable windings rectified together to rotate with the rotor, which is most similar to the first type mentioned above.

The prior art, therefor, has failed to disclose a simple yet rugged construction for an alternator or motor which is suitable for use in hazardous and hostile environments, and which will generate a current or torque output that is not limited by the strength of permanent magnets.

Summary of the Invention

It is a primary object of the present invention to overcome the deficiencies of the prior art discussed above and to provide a simple yet rugged brushless alternator or motor construction which can be used in a hazardous or hostile environment, and wherein the strength of the field is not limited to that of available permanent magnets.

It is another object of the present invention to provide an alternator suitable for, but not limited to, use on small vehicles like motorcycles, riding lawn mowers and industrial equipment that retains the simple mechanical ruggedness and low cost of permanent magnet alternators, and in which a much stronger magnetic field can be established by regulated electro-magnetic coils.

It is yet another object of the present invention to provide a brushless alternator or motor utilizing a binary architecture which essentially includes a stator having an even number of excitation or field coils mounted on salient poles of the stator, a like even number of armature coils around additional salient poles of the stator, and a movably mounted flux alternating element. The flux element includes a plurality of magnetically permeable flux links, each of which can bridge between an armature coil pole and a field coil pole, so that when the flux element is moved, the flux links continuously complete and break magnetic flux circuits consisting of a field coil pole, a flux link, an armature pole, and a portion of the stator.

It is yet another object of the present invention to provide a brushless alternator utilizing a binary architecture comprising a stator including a plurality of salient poles thereon evenly spaced around the periphery of the stator, wherein the number of salient poles must be a multiple of four. Direct-current excited field coils and alternating current producing armature coils are alternately wound on the salient poles along the sequence of poles, and opposite magnetic polarities are maintained between all neighboring excitation coils. A rotor is also included which has no salient poles or windings, but carries links of permeable magnetic material past the ends of the stator poles in such a manner that the magnetic flux circuits in the stator are completed in alternating directions, and thus cutting through the armature coils as the rotor is turned. An air gap is maintained between the links and the stator poles permitting flux flow thereacross. The rotor is constructed of nonmagnetic material, such as aluminum or plastic to prevent magnetic flux leakage, and carries links of magnetically permeable material, wherein each link is dimensioned to span the distance between two adjacent stator poles.

It is still yet another object of the present invention to provide a binary brushless alternator including a stator with a plurality of salient poles, defined as a multiple of four, which are alternately wound with D-C excited field coils and A-C producing armature coils, and a rotor carrying magnetically permeable links past the ends of the stator poles when turned in such a manner that magnetic flux circuits are completed in the stator through the armature coils in alternating directions. Further, the salient stator poles include axes which are perpendicular with respect to the axis of rotation of the rotor, and the rotor can be provided inboard of the ends of the stator poles or outboard of the ends of the stator poles.

It is still yet another object of the present invention to provide a binary brushless alternator including a stator with a plurality of salient poles, defined as a multiple of four, which are alternately wound with D-C excited field coils and A-C producing armature coils, and a rotor carrying magnetically permeable links past the ends of the stator poles when turned, wherein the salient stator poles include axes which are parallel with respect to the axis of rotation of the rotor. This parallel configuration advantageously produces an air gap between the rotor and the stator poles which is an axial gap that can be easily maintained during service of the device.

It is yet a further object of the present invention to provide a multi-phase alternator substantially in accordance with the above described pole configurations, wherein in order to make the device multi-phase, the number of magnetically permeable links on the rotor is not equal to the number of field coils. By varying the number of links on the rotor in conjunction with an appropriate winding scheme, a multiple phase current results, which is typically of a three-phase variation.

It is yet another object of the present invention to utilize the above described alternator devices in combination with each other for the generation of plural currents, which may or may not be used together to produce a multi-phase current, wherein one of the devices would be arranged to be out of phase with another device by a desired degree. The combinations can easily be made of radial inboard and outboard devices and/or with the parallel configurations.

It is also an object of the present invention to provide synchronous motors utilizing each of the configurations discussed above, wherein an AC power source is used to supply power to the armature coils for the purpose of generating angular movement of the rotor. Such a motor includes all of the advantages associated above with respect to a brushless binary alternator.

The above-noted objects and advantages of the present invention are obtained by a stator assembly of magnetically permeable material having a plurality of evenly spaced salient poles, wherein the number of salient poles is defined as 2n wherein n is an even number equal to or greater than two, to thereby always be a multiple of four. The poles are arranged such that every other pole sequentially along the stator is wound with an excitation coil and the inbetween poles are wound with an armature coil, thereby providing n excitation coils and n armature coils. The excitation coils are connected to a DC current source and each neighboring field coil is opposite in magnetic polarity to the others. A flux alternating means is also included for movement along the outer successive ends of the salient poles comprised of a nonmagnetic material with magnetically permeable links secured thereon which direct flux produced by the excitation coils alternately forwardly to a succeeding armature coil and rearwardly to a preceeding armature coil relative to the direction of movement of the flux alternating means. That is to say the links continuously complete and break magnetic flux circuits consisting of an excitation coil pole, a link, an armature pole and the stator, wherein the generated flux alternately cuts the armature coils in opposite directions as directed through the links from the opposite polarity excited coils preceeding and suceeding each armature coil. The device includes radial and parallel salient pole configurations and rotors, as well as combinations thereof. Also by varying the number of links relative to the number of excitation of field coils, a multi-phase current device is produced, whereas a like number of links and excitation coils will produce only single phase current. By providing an AC source current to the armature coils of the described device, a synchronous motor is obtained.

Other objects and advantages will become apparent following an examination of the following detailed description and drawings.

## BRIEF DESCRIPTION OF THE DRAWINGS

Figure 1A is a partial cross section basic concept side view of the binary architecture utilized in the present invention;

Figure 1B is a similar partial cross section as in Figure 1A with the rotor advanced by a single step;

Figure 2 is a partial cross sectional end view of a radial outboard device utilizing the binary architecture of the present invention;

Figure 3 is a cross sectional view taken along line A-A in Figure 2;

Figure 4 is a partial cross sectional view of a radial inboard device utilizing the binary architecture of the present invention;

Figure 5 is a top side view of a parallel type device utilizing the binary architecture of the present invention;

Figure 6 is a view along line Z-Z in Figure 5;

Figure 7 is a cross section along line X-X in Figure 5;

Figure 8 is a cross section along line Y-Y in Figure 6;

Figure 9 is a multi-phase unit in accordance with the present invention utilizing the same binary architecture.

Figure 10 is a plot illustrating the coil fluxes of a three-phase alternator in accordance with the device of Figure 9.

## DETAILED DESCRIPTION OF THE PREFERRED EMBODIMENTS

A binary brushless alternator and motor of the present invention will be described below and the descriptions will generally be directed to generators with the understanding that the same or similar ideas will pertain to motors. Also, for the purpose of clarity the minimum possible number of poles and phases have been described and shown in the figures.

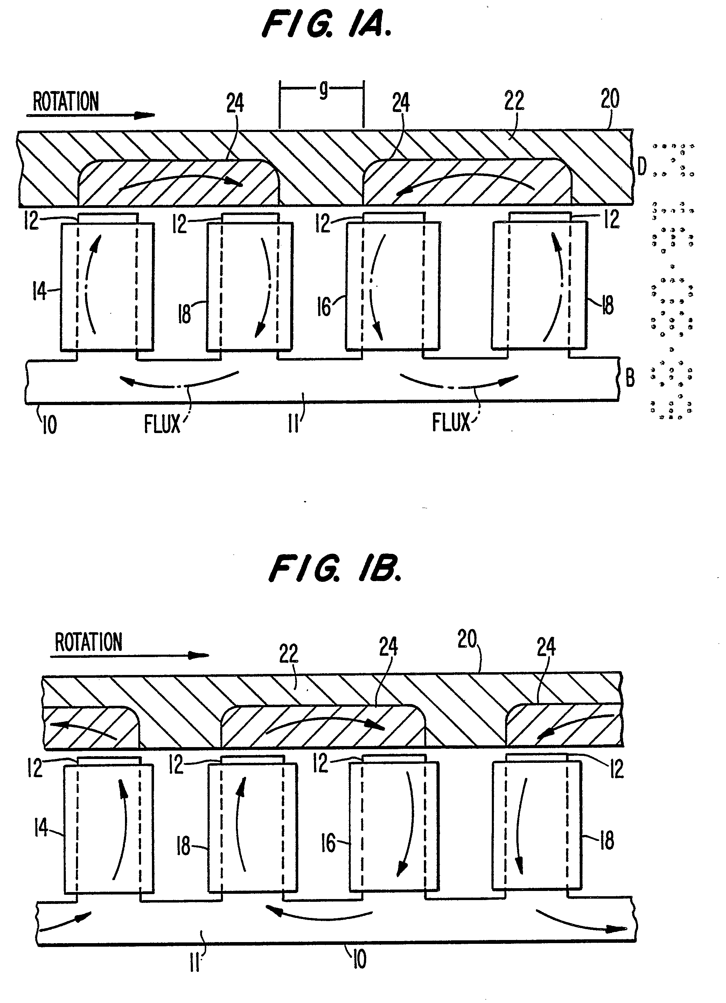

Referring now to the drawings, Figures 1A and 1B show the basic components and arrangement of the binary architecture according to the invention. A stator assembly 10 is shown comprised of a magnetically permeable material with a pole bridging body 11 and a plurality of salient poles 12 disposed to extend therefrom. The number of poles 12 will always be a minimum of at least four poles and can be more than four poles provided that the number of poles will always be a multiple of four. The reasons for this will become apparent with respect to the description of the excitation or field coils and armature coils set forth below. Field coils 14 and 16 are wound around the first and third stator poles and are attached to a regulated DC power source, so that they present opposite magnetic poles. The opposite magnetic polarity can be obtained by winding the field coils in opposite directions or appropriately connecting the field coils to opposite polarity DC sources. The second and fourth poles 12 are wound with armature coils 18, thereby providing alternating field coils and armature coils on the stator assembly 10 with each successive field coil of opposite magnetic polarity than the preceding and succeeding field coil. Because this inventive device requires there to be at least one set of opposite polarity field coils, and one armature coil for each field coil, it is apparent that there will always be a multiple of four stator poles and a minimum of at least four. The stator 10, is of course, stationary in accordance with its general meaning and can be mounted in any appropriate way in the vicinity of a moving element as described hereinafter.

A rotor assembly 20 is also shown in Figures 1A and 1B which provides the aforesaid flux alternating element and is constructed of a nonmagnetic material 22, which is preferably made of aluminum but may be any other nonmagnetic metal or plastic. The rotor carries flux directing links 24 thereon which are constructed of a magnetically permeable material such as a well known ferromagnetic material or the like. The links 24 must be of sufficient length to span the distance between two of the stator poles 12, and are spaced from each other by a distance designated as "g" in Figure 1A which is equal to the distance between any two of the evenly spaced salient poles 12.

The stator pole bridging body 11 and salient poles 12 must also be constructed of a magnetically permeable material, such as previously discussed with respect to the rotor links 24, such that magnetic flux can travel through both the stator and the rotor links. Preferably, the stator and flux links will be constructed of a laminated construction to reduce the losses due to eddy currents, as is well known in conventional current generating devices. As also seen in Figure 1A, a magnetic flux is generated by each of the DC excited field coils 14 and 16 and each of the field coils is responsible for the production of a magnetic flux circuit which is comprised of one stator pole 12 wound with a field coil thereon, one rotor link 24, another stator pole 12 which is wound by an armature coil 18 and to complete the circuit a portion of the pole bridging body 11 of the stator 12. These circuits are clearly shown in Figure 1A by the arrows wherein field coil 14 generates a magnetic flux circuit in a clockwise direction and the field coil 16 produces a magnetic circuit in a counter-clockwise direction. The cutting of the armature coils 18 by the magnetic flux circuits will generate a current in each armature coil 18 which is directly related to the change of magnetic flux through each completed circuit. As each link 24 passes from a front edge to a rear edge of the stator poles 12 the magnetic flux intensity is changed so as to produce current in the armature coils 18.

Because the field coils are successively mounted on every other stator pole in a manner to produce opposite magnetic polarity, the direction of magnetic flux through the armature coils is reversed with each completion of a magnetic circuit between the successive stator poles 12 by the magnetic flux links 24. In Figure 1B, the rotor is shown moved to the right by one stator pole pitch such that it is clearly seen by the arrows of flux travel that the flux lines cut the armature coils 18 in the opposite direction from that in Figure 1A. However, the flux is reversed in the rotor flux links at half the reversal frequency of the stator poles, whereas in Figure 1B the center link 24, which corresponds to the left link in Figure 1A, still shows flux travel from the left side to the right side. As the link is moved by one more stator pole to the right, the flux travel in the link will reverse as shown in the right side link of Figure 1A.

It is specifically this type of construction to utilize an even number of field excitation coils and a like even number of armature coils, which is considered the binary architecture of the present invention. The magnetic flux circuits are continuously completed and broken by the rotation of the links on the rotor, whereas the magnetic flux circuits alternatively cut the armature coils in opposite directions to produce alternating current (AC current) which is thereafter appropriately wired by a pick-up wiring scheme and utilized as output current of the inventive device. In this type of binary architecture, there is no need for slip rings, commutators or brushes because there is no need to transfer either the supplied DC current or the generated AC current between the rotating member and the stationary member. This inventive architecture also eliminates the need for any complicated or complex winding techniques, such as a toroidal winding, whereas the field coils and armature coils are simply wound about salient poles 12 which extend from a stator device 10.

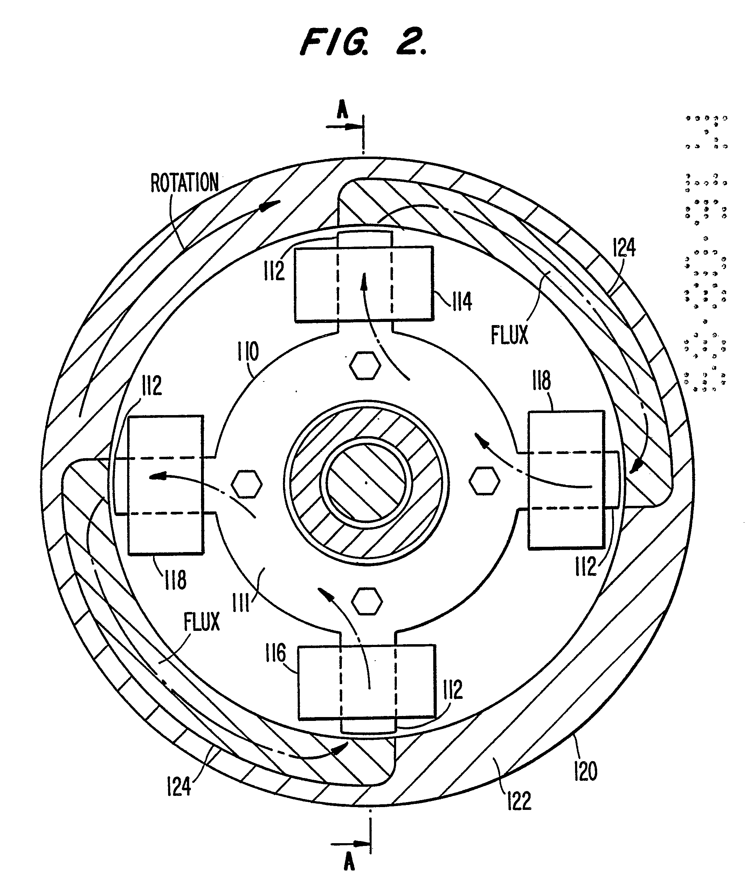

In Figure 2, the binary architecture of the present invention has been utilized in what is referred to as a radially outboard type arrangement.

Particularly this device comprises a stator 110 comprised of a pole bridging body 111 with four salient poles 112 extending radially outwardly therefrom. Field coils 114 and 116 are provided on alternating poles 112 and are mounted in a manner to provide opposite polarity in every other field coil similarly as discussed above with reference to Figure 1. Armature coils 118 are likewise wound about each of the other salient poles 112. A rotor 120 is shown comprised of a nonmagnetic material portion 122 and magnetically permeable flux links 124 which are of a sufficient length to span the pitch distance between successive stator poles 112.

In operation, with the movement of the rotor as shown by the arrow, the rotor flux links 124 will selectively complete and break magnetic flux circuits consisting of a stator pole 112 wound by field coil 114, a flux link 124, a second stator pole 112 wound by armature coil 118 and a portion of the pole bridging body 111. Current will thereby be produced in armature coils 118 due to the rate of flux change through the flux circuit as the link moves from the front to the rear edge of each of the stator poles 112. It is also evident that as the flux link 124 moves another 90 degree pitch distance, a next magnetic flux circuit will be produced in an opposite flux flow direction which cuts the armature coil 118 in the opposite direction thereby producing the AC current. As in Figure 1, each of the armature coils 118 are therefor appropriately wired by a pick-up scheme for AC current usage. The air gap provided between each of the stator poles 112 and the flux links 124 is chosen to be sufficient to permit the magnetic flux to transfer therethrough.

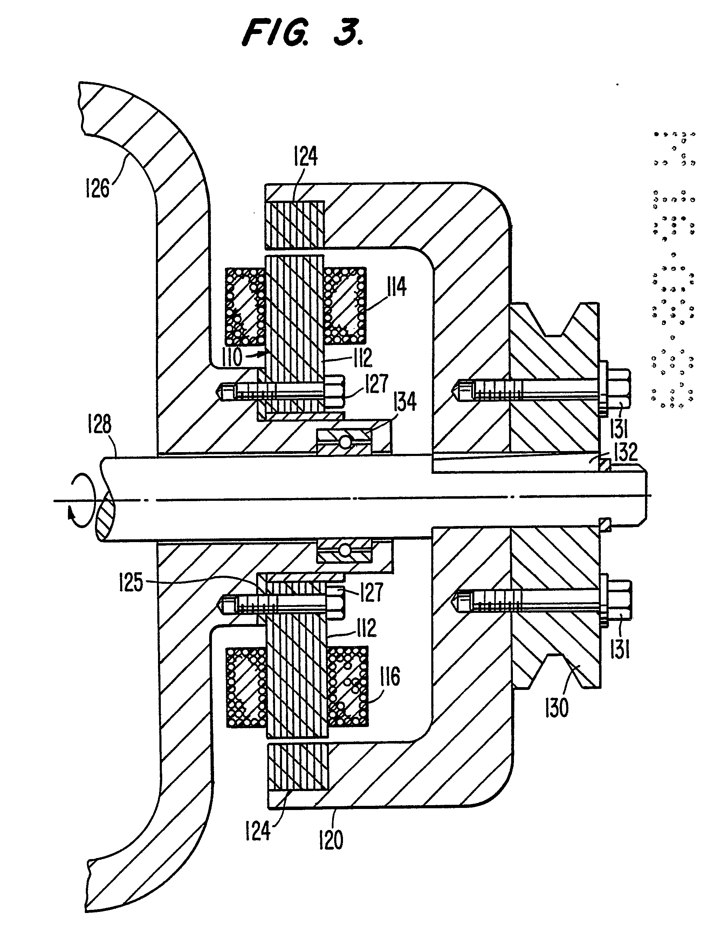

Figure 3 shows the same embodiment of Figure 2 in a cross section taken along line A-A of Figure 2, illustrating the stator and rotor in a practical environment. The stator 110 is appropriately secured to a shoulder or flange 125 of a stationary element 126 such as a side cover or the like of an engine casing which permits a rotating shaft 128 to extend therethrough for the purpose of driving the rotor 120. The shaft 128 can be driven by the motor itself internal of the case 126 or can alternatively be driven from an external shaft connected via a pulley 130 secured to the rotor by bolts such as at 131, and which is keyed to the shaft 128 by key 132. A bearing member 134 may also be provided to permit easy rotation of the shaft 128 to the casing 126.

As can be seen in Figure 3 the stator and stator poles 112 are constructed of laminate magnetically permeable material and so are the links 124. The field coils 114 and 116 are shown wound about opposite stator poles 112 which will create opposite magnetic polarity to the stator poles 112.

The Figure 3 embodiment illustrates the rotor 120 as being of a U-shape cross-sectional configuration, viewed along the axis of rotation of shaft 128. This shaped rotor is additionally advantageous in that the flux links 124 are provided at only the leg end of the rotor proximate to the end thereof. This construction therefore requires only that the links are of a relatively heavy ferro-magnetic material, while the remaining rotor construction is of a light weight material which could be metal or plastic or the like. In the prior art devices discussed in the Background Section, a long flux travel path is always required thereby requiring the use of a ferro-magnetic material for the entire casing components. The present invention utilizes a very short flux path whereby the flux only travels through the relatively short flux links, thereby eliminating the need to have the entire rotor assembly of heavier ferro-magnetic material. The present construction reduces both costs and weight and provides a simple manner to direct alternating magnetic flux circuits.

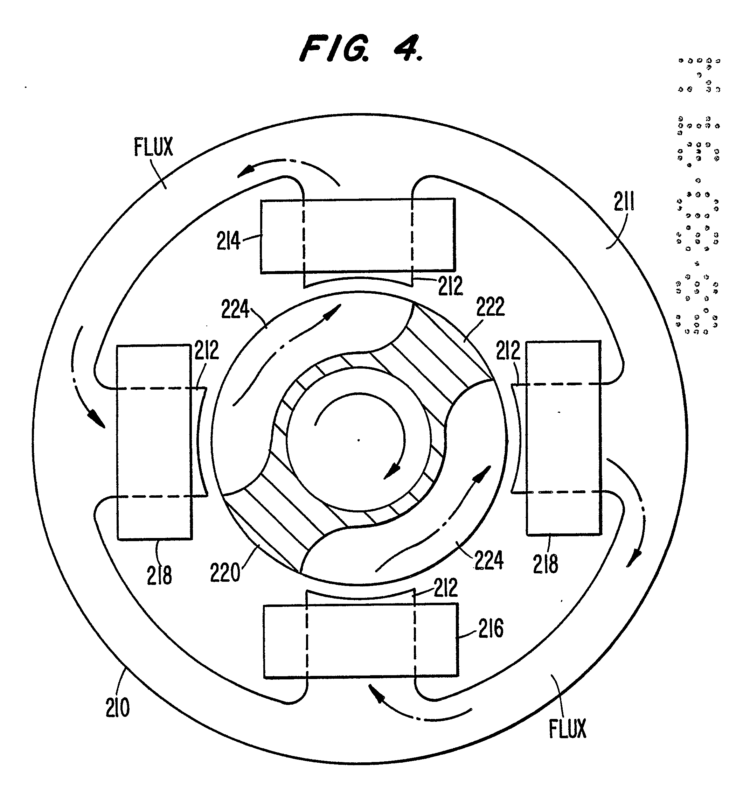

Figure 4 illustrates another embodiment of the present invention utilizing the binary architecture according to the invention. This embodiment illustrates the radially inboard construction which utilizes a stator assembly 210 comprised of a pole bridging body 211 and stator poles 212 which extend radially inwardly from the back iron 211. The stator poles are wound with alternating field coils and armature coils as in the previous embodiment of Figure 2 and 3, and the field coil 214 is of opposite magnetic polarity and that of field coil 216. A rotor assembly 220 is rotatably mounted relative to the stator assembly 210 and is rotatably driven in any appropriate manner. The rotor 220 is comprised of a nonmagnetic material 222 with magnetically permeable flux links 224 secured thereto. The flux links 224 are of sufficient length to span the distance between successive stator poles 212. As is clearly illustrated, magnetic flux circuits are generated by the excited field coils 214 and 216 such that the magnetic flux cuts the armature coils 218 in opposite flux directions as the rotor is moved in a single angular direction, and the rate of change of the magnetic flux as the links move between the front and rear edges of each pole 212 generates the AC current in the armature coils 218. Similarly as in the above embodiments, the armature coils 218 are wired appropriately by a winding scheme for utilization of the generated AC current. As in the previous embodiments, the rotor in operation carries the flux links 224 past the stator poles 212 to continuously complete and break magnetic flux circuits to thereby cut each armature coil 218 with magnetic flux lines in opposite directions.

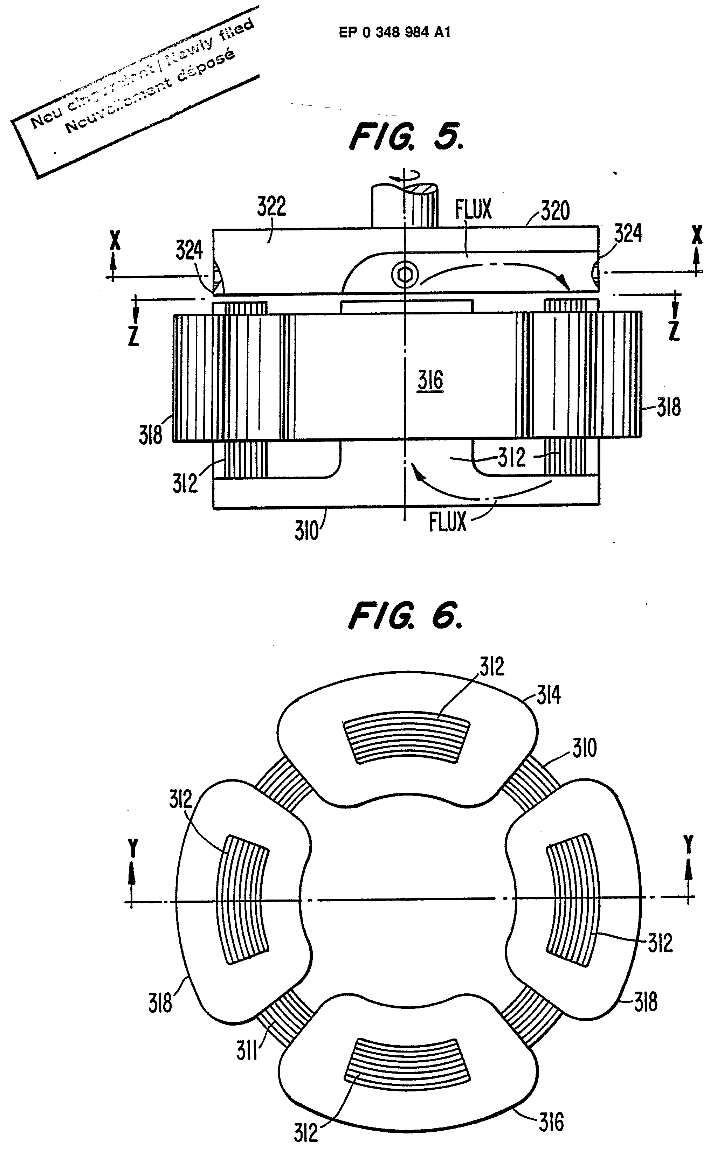

Figures 5 through 8 are directed to another embodiment of the present invention which also utilizes the same basic binary architecture, wherein the stator poles 312 are arranged to extend parallel to one another and to the axis of rotation. In Figure 5 it can be seen that the stator 310 is comprised of a pole bridging body 311 with plural stator poles 312 extending therefrom parallel to one another. As seen in Figure 6, the stator poles 312 are alternatively wound with field coils 314 and 316 and armature coils 318. The field coils 314 and 316 are mounted to the poles 312 in a manner to provide opposite magnetic polarity to every other field coil successively along the stator assembly 310.

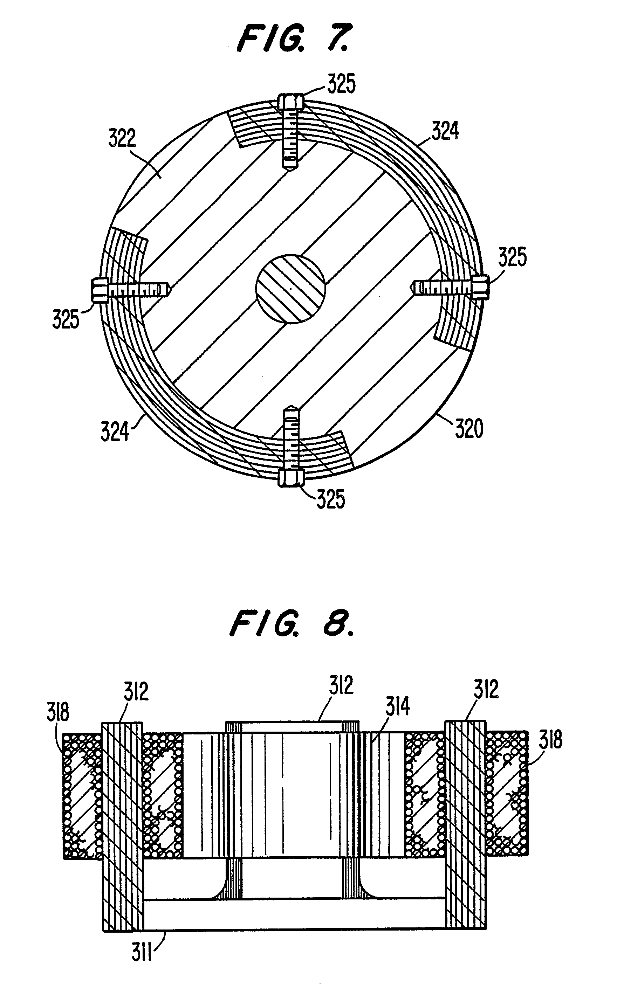

Rotor 320 is shown in Figure 5 and also in cross section in Figure 7, which comprises a nonmagnetic material portion 322 and magnetically permeable links 324 secured to the nonmagnetic portion 322, for example by cap screws or bolts 325. These links 324 are of sufficient distance to span between two successive stator poles 312 to continuously break and complete magnetic flux circuits as the rotor is rotated, wherein each circuit comprises one field coil stator core, a link 324, an armature coil stator pole and a portion of the stator. Likewise in the above embodiments the flux lines are completed in alternating directions through the armature coils 318 and the rate of change of the flux lines through the armature coil 318 produces the alternating current therein.

In the Figure 5 embodiment the rotor 320 is shown as a disc-like element which is brought into close proximity with the outermost ends of each of the salient poles 312. The disc can thereby be appropriately connected to any type of rotational drive mechanism, such as a driven shaft, to thereby cause the generation of AC current in armature coils 318 for subsequent use thereof as facilitated by an appropriate pick-up scheme. This construction additionally is advantageous in that the axial gap between each stator pole 312 and the rotor links 324 can be easily and precisely regulated by simply moving the entire disc 320 relative to the stator 310. This could easily be done by slidably mounting the stator 310 to its support assembly or by slidably and rotationally mounting the rotor 320 relative to its drive assembly. Either of the assemblies could also include a lock or setting means to fixedly define the air gap in its optimum position. Also as in the previous embodiments, the flux path is kept relatively short, thus necessitating only a small amount of ferro-magnetic material on the rotor, thereby leaving the remainder of the rotor to be of an inexpensive and light weight material.

In each of the above described embodiments, during operation, the flux links on the flux alternating element, such as a rotor, complete the magnetic circuits through the stator poles at one instance, and as the flux alternating element is moved one stator pole pitch in the direction of movement, the flux changes direction through the armature poles, and when the flux alternating element has moved yet another stator pole pitch distance along the direction of rotation the flux through the armature poles changes back to the original direction and a complete AC cycle is generated Thus, the rotational movement of two pole pitches in the direction of rotation completes a single AC cycle, and the magnetic flux is seen to oscillate between the two states in the armature coils as the rotor continues turning. The spacing g as shown in Figure 1A between the flux links is equal to the stator pole pitch distance, neglecting pole width overlap, and this is appropriate for a single phase machine since the flux circuits through the armature coils are completed at the same instant in time.

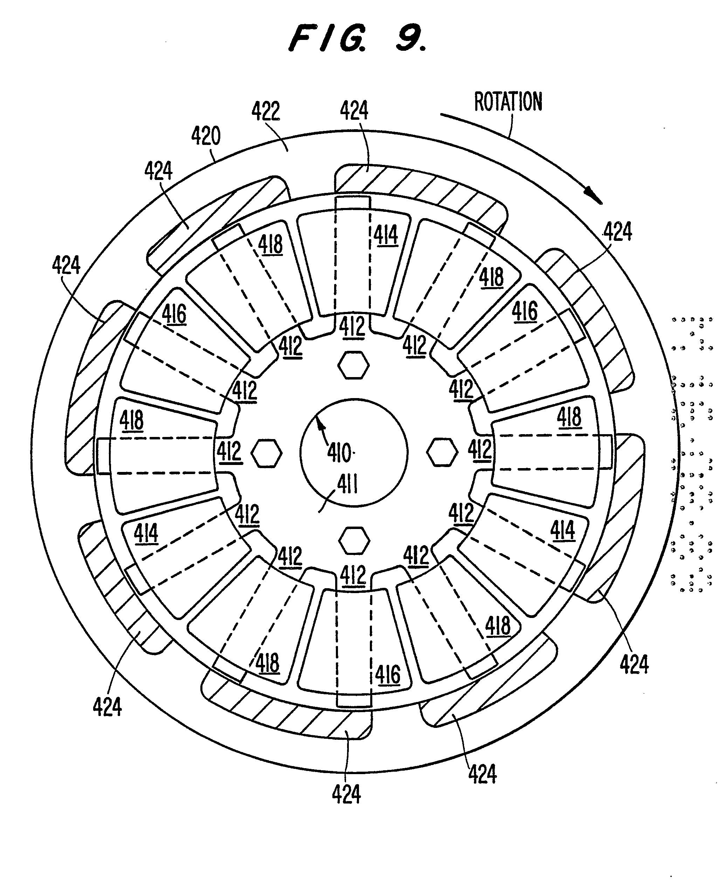

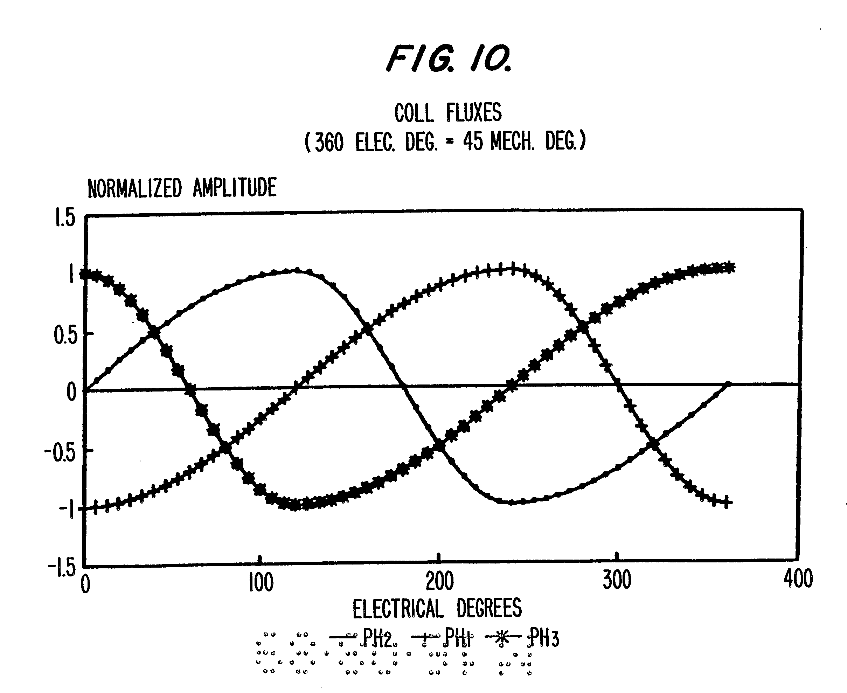

Multiple-phase machines are created by changing the link spacing to some distance other than the stator pole pitch, thus causing a time lag between the completion of the individual magnetic circuits, and a corresponding phase difference in the output of the armature coils. Thus the total number of flux links in the multiple-phase machine will no longer be equal to the total number of field coils. In this regard, a twelve pole three-phase radial outboard design is illustrated in Figure 9. This design utilizes 12 stator poles 412 connected to stator pole bridging body 411, wherein there are six excitable field coils of which three are mounted to create a magnetic polarity in one direction, as at 414, and three others are mounted at 416 to create an opposite magnetic polarity, similarly to the basic component embodiments discussed above. Armature coils 418 are also provided on every other stator pole 412 of which there are six. However, in accordance with the multiple-phase principles discussed above there are now provided eight magnetically permeable flux links 424 secured to the nonmagnetic material 422 of rotor assembly 420. In this design the armature coils are appropriately combined to produce a three-phase current wherein the coils of a particular phase may be placed in series or parallel with one another and the phases may be connected as an output current by either a "delta" or a "Y" configuration. Specifically, when looking at Figure 9 as though the poles 413 where positions on a clock face, phase-one armature coils would be provided at one and seven o'clock, phase-two armature coils at five and eleven o'clock, and phase-three armature coils at nine and three o'clock. The position of the links illustrated in Figure 9 wherein the first of eight evenly spaced links span the twelve and one o'clock stator poles, corresponds to the mechanical position of the zero electrical degree position. At zero degrees, the phase one coils have the minimum (maximum negative) possible flux, phase two coils have zero flux, and phase three coils have the maximum positive flux. The coil fluxes throughout a single cycle of each phase of the three-phase design as illustrated in Figure 10.

As mentioned earlier, the simple four-pole designs are shown to demonstrate the operating principles of the binary architecture of the present invention. However, it is preferable that a commercial embodiment would include a greater number of poles, which would be limited to a multiple of four. These such devices may be single phase or multiple phase, and the multiple phase could theoretically be any multiple phase provided that an appropriate link and wiring system is properly calculated.

The binary architecture of the present invention can also be used to construct combination devices utilizing a plurality of devices which may include more than one of a same embodiment, as discussed above, or may be a combination of different embodiments. In a combination type structure, it is possible to provide a plurality of devices out of phase with one another to thereby generate multi-phase current, provided an appropriate pick-up winding scheme is used.

All of the above noted principles of the binary architecture of the invention are likewise applicable to synchronous motor construction. Such an AC synchronous motor would rely on the same principles and concepts and would utilize this same basic architecture. However, as is well known in the art, one would need to apply AC current to the armature coils in conjuction with the current supplied to excite the field coils, to thereby produce motion to a flux alternating element, such as a rotor or linear element, at synchronous speeds. Therefor, any of the above designs whether the radial inboard, radial outboard, parallel or multi-phase units could readily be applied to a synchronous motor.

While there has been shown and described specific embodiments of the present invention, further modifications and approvements will occur to those skilled in the art. All such modifications which retain the basic binary principles and architecture disclosed and claimed herein are within the scope of this invention.

INDUSTRIAL APPLICABILITY

The binary brushless alternator assembly of the present invention will find its primary application on small industrial vehicles, motorcycles, lawn mowers, outboard motors, and the like. This device is particularly suitable for hostile environments such as where explosive or flammable gases and liquids are used, or wherein the device would be subject to rugged terrain or harsh treatment. These environments are typically those in which permanent magnet type alternators are used today. However, the alternators of the present invention also have applicability to larger industrial and amphibious equipment as well as the automotive, aircraft, and marine industries. The present invention is relatively easy to construct and is not limited in strength to available permanent magnets, therefor opening up the possibility of use for a device of binary architecture in areas where the AC current demand is much greater.

The binary brushless motor of the present invention will finds its primary application in very small synchronous and stepper applications such as computers, disk drives, printers, and robots where permanent magnet types are now used. These devices could be made even smaller in accordance with the higher available strength of the electro-magnets versus the permanent magnets of the prior art.

Claims

1. A binary brushless dynamoelectric machine, comprising

a. a stator assembly of magnetically permeable material having 2n successively spaced apart salient poles wherein n is an even number equal to or greater than two;

b. n excitation coils mounted, respectively, on alternate successive ones of said salient poles, said excitation coils being arranged when energized to produce flux in alternate directions at the outer ends of the successive salient poles on which said excitation poles are mounted;

c. n armature coils mounted, respectively, on said salient poles located between said excitation coils; and

d. flux alternating means, mounted for movement along the successive outer ends of said salient poles, for directing flux produced by each said excitation coil alternately forwardly to a succeeding armature coil and rearwardly to a preceding armature coil relative to the direction of movement of said flux alternating means.

2. The machine of claim 1, wherein successive said excitation coils are wound in opposite directions and are adapted to be energized by a source of direct current.

3. The machine of claim 1, wherein said flux alternating means includes a body portion formed of non-magnetic material and a plurality of magnetically permeable links secured to said body portion.

4. The machine of claim 3, wherein the outer ends of said salient poles are evenly spaced and wherein each said link has an effective length spanning the outer ends of two adjacent salient poles.

5. The machine of claim 1, wherein said dynamoelectric machine is an alternating current generator and said flux produced by said excitation coils generates alternating current in said armature coils by cutting the armature coils when said flux alternating means is moved.

6. The machine of claim 4, wherein said stator assembly includes a pole bridging body and said salient poles extend therefrom in a direction perpendicular to the direction of movement of said flux alternating means.

7. The machine of claim 6, wherein said flux alternating means is a rotor which is mounted to rotate relative to said stator assembly.

8. The machine of claim 7, wherein said salient poles extend radially from said pole bridging body to ends thereof and said links circumferentially bridge said ends of said salient poles, and a predetermined air gap is provided between said links and said salient poles.

9. The machine of claim 8, wherein said salient poles extend radially outward from said pole bridging body.

10. The machine of claim 9, wherein said stator assembly is mounted on a shoulder of an engine casing member and said rotor is connected to a shaft which is rotatably supported by a bearing in said casing member, and wherein said rotor is substantially U-shaped in cross section along its axis of rotation and said links are secured to the rotor on the leg portion thereof.

11. The machine of claim 10, wherein the rotor is driven by said shaft operatively connected to a drive shaft of an engine.

12. The machine of claim 10, wherein the rotor is driven by said shaft and a pulley secured to said shaft which is operatively driven by a flexible transfer means.

13. The machine of claim 8, wherein said salient poles extend radially inward from said pole bridging body and said links circumferentially bridge the inner ends of said salient poles.

14. The machine of claim 7, wherein said salient poles extend parallel to each other from said pole bridging body to ends thereof and parallel to the axis of rotation of said rotor, said links circumferentially bridge said ends of said salient poles, and a predetermined air gap is provided between said links and said salient poles.

15. The machine of claim 14, including a drive means connected to said rotor for rotating said rotor, and wherein said drive means includes a shaft.

16. The machine of claim 6, wherein there are provided a like even number of links on said flux alternating means as there are excitation coils, to thereby produce a single-phase alternating current when the flux alternating means is moved.

17. The machine of claim 6, wherein there are provided a different number of said links than said excitation coils, to thereby produce a multiple-phase alternating current.

18. The machine of claim 17, wherein there are eight links, six excitation coils, and six armature coils, to thereby produce three-phase alternating current.

# FIG. IA.

ROTATION

g

24    24    22    20

D

12    12    12    12

14    18    16    18

10    FLUX    11    FLUX    B

# FIG. IB.

ROTATION

22    24    20    24

12    12    12    12

14    18    16    18

11    10

# FIG. 2.

# FIG. 3.

# FIG. 4.

FLUX

214

212

224

222

212

218

212

220

218

216

224

212

210

211

FLUX

## FIG. 5.

## FIG. 6.

# FIG. 7.

325

322

324

325

325

324

320

325

# FIG. 8.

318    312    312    314    312    318

311

# FIG. 9.

# FIG. 10.

COLL FLUXES
(360 ELEC. DEG. = 45 MECH. DEG.)

EP 0 348 984 A1

**European Patent Office**

# EUROPEAN SEARCH REPORT

Application Number

EP    89 11 1891

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | LU-A-54666 (MARCHAL ET MOTOROLA)<br>* page 14, line 17 - page 17, line 9 *<br>* page 21, line 5 - page 30, line 18; figures 1, 6, 7, 10-12. * | 1-8, 13, 16, 17. | H02K19/24 |
| Y | | 18. | |
| Y | GB-A-698527 (SMALL ELECTRIC MOTORS)<br>* page 1, line 51 - line 79; figure 1. * | 18. | |
| X | US-A-3289021 (FAVRE)<br>* column 1, line 43 - column 4, line 43; figures 1-4. * | 1, 3-9, 11, 13, 16. | |
| Y | | 10, 12. | |
| Y | US-A-3219859 (TERRY ET AL)<br>* column 2, line 16 - column 3, line 39; figures 1, 2. * | 10. | |
| Y | FR-E-94561 (LEBLANC)<br>* page 1, line 13 - page 3, line 8; figures 1, 2. * | 12. | |
| X | FR-A-475501 (HEYLAND)<br>* page 4, line 3 - line 75; figure 4. * | 1-8, 16. | TECHNICAL FIELDS SEARCHED (Int. Cl.5)<br><br>H02K |
| Y | | 14, 15. | |
| Y | GB-A-2100936 (CHING CHUEN CHAN ET AL)<br>* page 1, line 5 - line 102; figures 1-3. * | 14, 15. | |
| X | US-A-1773074 (BORRESON)<br>* page 1, line 14 - page 2, line 22; figures 1-6. * | 1, 3-8, 13, 16. | |

The present search report has been drawn up for all claims

| Place of search | Date of completion of the search | Examiner |
|---|---|---|
| THE HAGUE | 13 SEPTEMBER 1989 | TIO K.H. |